# EUROPEAN PATENT SPECIFICATION

(11) **EP 0 361 573 B1**
(45) Date of publication and mention of the grant of the patent: **18.11.1993**
(21) Application number: 89202246.8
(22) Date of filing: 06.09.1989
(51) Int. Cl.: A01D 34/66, A01D 43/10

(54) **A mowing machine**
Mähmaschine
Faucheuse

(30) Priority: 13.09.1988 NL 8802242
(43) Date of publication of application: 04.04.1990
(73) Proprietor: C. van der Lely N.V., NL-3155 PD Maasland (NL)
(72) Inventor: Van der Lely, Cornelis, Ch-Zug (CH)
(74) Representative: Mulder, Herman

(56) References cited:
- EP-A- 0 116 661
- EP-A- 0 258 930
- EP-A- 0 269 166
- DE-A- 1 507 389
- DE-A- 2 151 156
- DE-A- 2 230 245
- FR-A- 2 110 911
- FR-A- 2 127 703
- FR-A- 2 210 089
- FR-A- 2 255 839
- FR-A- 2 434 554
- FR-A- 2 557 418
- FR-A- 2 584 889
- FR-A- 2 608 362
- GB-A- 792 939
- GB-A- 2 063 633
- NL-A- 8 700 863
- US-A- 3 783 533

## Description

The present invention relates to a mowing machine comprising a carrier frame provided with coupling points for connecting the mowing machine to the lifting hitch of a tractor, a frame which is connected pivotably to the carrier frame about a substantially horizontal shaft in the direction of operative travel, mowing members which are connected to the frame and are drivable about upwardly extending rotary shafts, and at least one weight relief member, active during operation of the machine between the carrier frame and the frame with the mowing members.

A mowing machine of the above-defined type is disclosed in EP-A-0 258 930.

In order to work a strip of crop beside a tractor, it may be advantageous, particularly when the speed of travel over the field is comparatively high, to employ a mowing machine which is supported in the lifting hitch of the tractor rather than a tractor-haulded one. However, a rapid adaptation of its mowing members to unevennesses of the soil and an optimum stability will not always be obtained.

Therefore, according to the invention, the above-defined mowing machine is characterized in that the frame is supported by at least two ground wheels, while means including a spring-loaded member are provided allowing of a movement of the mowing members in upward and downward direction relative to the frame and/or the ground wheels. So, in accordance with the invention, a mowing machine is obtained which is a tractor-haulded one, whereby part of weight is compensated by supporting the machine in the lifting hitch of the tractor and by using a weight relief member.

According to the invention, in a preferred embodiment, the ground wheels can be mounted in a fixed position relative to the frame and the mowing members can be connected to the frame movably in upward and downward direction relative thereto. The weight of the mowing machine is then largely taken up by the weight relief member and the ground wheels, while the mowing members bear on the soil by only part of their weight. The movability of the mowing members relative to the frame enables such an adjustment of the pressure of the mowing members on the soil that a fast adaptation of the mowing members to unevennesses of the soil can be obtained, while, in addition, the wear of the means via which the mowing members bear on the soil is slight. In this embodiment, the mowing machine in accordance with the invention may include a crusher device, in which machine the mowing members are mounted in the frame capably of movement in upward and downward direction relative the the crusher device, which may provide the advantage that the mowing members can adapt themselves to unevennesses of the soil without the crusher device being moved along with the mowing members; the crusher device can be connected rigidly to the frame.

In the above preferred embodiment, the machine may include, also in accordance with the invention, a crusher device which is mounted in the frame movably in upward and downward direction relative thereto; the crusher can then be mounted in a fixed position relative to the mowing members, which has an advantageous effect on the crushing operation.

In another embodiment, in accordance with the invention, the mowing members can be mounted in a fixed position relative to the frame and the ground wheels can be connected to the frame movably in upward and downward direction relative to the mowing members. In this connection, the weight of the mowing machine is largely taken up by the weight relief member and the mowing members, while a still further weight relief of the mowing machine relative to the soil is obtained via the ground wheels. The movability of the ground wheels with respect to the frame enables such an adjustment of the pressure of the mowing members on the soil that, also in this embodiment, a fast adaptation of the mowing members to unevennesses of the soil can be obtained.

In all the embodiments, it is advantageous for the means allowing of a relative movement in upward and downward direction between the ground wheels on the one hand and the mowing members on the other to include a spring-loaded member; it is likewise advantageous for those means to include a member damping the said relative movement.

According to the invention, the relative movement in upward and downward direction between the ground wheels on the one hand and the mowing members on the other can advantageously be obtained by a hinging quadrangle structure, in particular a parallelogram structure. More specifically, in the first mentioned embodiment, the mowing members can be connected to the frame capably of movement in upward and downward direction relative thereto by means of a hinging quadrangle structure.

According to the invention, the hinging quadrangle structure includes upper and lower pivotal arms, respectively, which, in the first embodiment, are coupled to the frame via first aligned pivot pins and to the mowing members via second aligned pivot pins. From their points of connection to the frame, the pivotal arms preferably extend obliquely downwardly and, taken in the direction of operative travel of the mowing machine, rearwardly. In addition, the hinging quadrangle structure of the invention comprises spring-loaded members, by means of which the mowing members may be connected to the frame capably of spring-induced movement relative thereto. In this situation, these spring-loaded members preferably act at least on a diagonal in the hinging quadrangle structure and may optionally be provided with an adjusting mechanism to have the mowing members be supported with greater or lesser spring force at least partly by the frame.

Although in the first mentioned embodiment the mowing members can be connected individually to the frame by means of a hinging quadrangle structure, preference should be given in accordance with the invention to providing the mowing members on mowing member carrier elements, which carrier elements together with any optional intermediate elements provided therebetween and the mowing members constitute a cutter bar which is connected in its totality to the frame via the hinging quadrangle structure; in particular, the cutter bar may be connected near both its ends to the frame by means of the hinging quadrangle structure. In a specific embodiment, the cutter bar is provided near both its ends with an at least upwardly extending mounting bracket rigidly connected thereto, the hinging quadrangle structure engaging the said mounting brackets. In this specific embodiment, the frame comprises a frame beam which, taken in the direction of operative travel of the mowing machine, preferably extends at least substantially above the leading sides of the mowing members. Then, the mounting brackets extend at least substantially to the same height as that at which the frame beam is located. In the specific embodiment, a ground wheel is located behind the cutter bar near each of its two ends and within the mowing range. Optionally, these ground wheels can be arranged in the frame by means of spring-fitted structures which operate independently of each other; these spring structures can then include an adjustable spring member.

Furthermore, the coupling points may be constituted by a coupling trestle, by means of which the mowing machine can be connected to the three-point lifting hitch of a tractor. In addition, the carrier frame may be fitted with a carrier arm, one end of which is connected to the coupling trestle whether or not capably of pivoting about an axis extending substantially in the direction of operative travel and the other end of which is connected to the frame capably of pivoting about an axis extending substantially in the direction of operative travel.

It will suffice to have one weight relief member constituted by a, preferably, length-adjustable weight relief spring, the spring being arranged either between the coupling trestle and the frame or between the coupling trestle and a carrier arm point located near the frame.

The crusher device comprises a crusher rotor having a substantially horizontal rotary shaft and a hood; in accordance with the invention, the rotary shaft and the hood are accommodated in, respectively connected to, a crusher carrier frame which is either rigidly connected to the frame or arranged in a fixed position relative to the mowing members. Both the mowing members and the crusher rotor can be driven from the power take-off shaft of the tractor, the drive shaft of both the mowing members and the crusher rotor being provided with a universal coupling.

Furthermore, the mowing machine according to the invention may include means for moving the frame upwards with respect to the carrier frame about the axis which extends substantially in the direction of operative travel.

The mowing machine of the invention is especially suitable for working a strip of crop beside the tractor, the mowing machine having a working width of approximately 250 cms. The mowing machine can be supported by a rear-mounted lifting hitch as well as by a front-mounted one.

For a better understanding of the invention and to show how the same may be carried into effect, reference will now be made, by way of example, to the accompanying drawings, in which:
Figure 1 is a plan view of a first embodiment of a mowing machine according to the invention, provided with a crusher device;
Figure 2 is a more detailed representation of the plan view of Figure 1;
Figure 3 is a side view of the mowing machine shown in the plan views of Figures 1 and 2;
Figure 4 is a rear view of part of the mowing machine illustrated by the plan views of Figures 1 and 2;
Figure 5 is a side view of a second embodiment of a mowing machine according to the invention, the second embodiment differing from the first one in that the crusher device is absent;
Figure 6 is a portion of a plan view of a third embodiment of a mowing machine according to the the invention, provided with a crusher device;
Figure 7 is a side view of the mowing machine shown partly in the plan view of Figure 6;
Figure 8 is part of a plan view of a fourth embodiment of a mowing machine in accordance with the invention, provided with a crusher device;
Figure 9 is a side view of the mowing machine shown partly in the plan view of Figure 8.

In the drawings, corresponding components have been denoted by the same reference numerals.

The invention is not limited to the embodiments shown in the drawings, which embodiments only serve as illustrations of the invention.

The shown embodiments of the mowing machine according to the invention include a cutter bar 1 accommodated in a frame 2. The frame 2 is connected to the carrier arm 4 of a carrier frame 5 capably of pivotal movement about the shaft 3 which extends substantially in the direction of operative travel. The carrier frame 5 is furthermore provided with coupling points, defined by a coupling trestle 6, for connecting the mowing machine to the three-point lifting hitch 7 of a tractor 8.

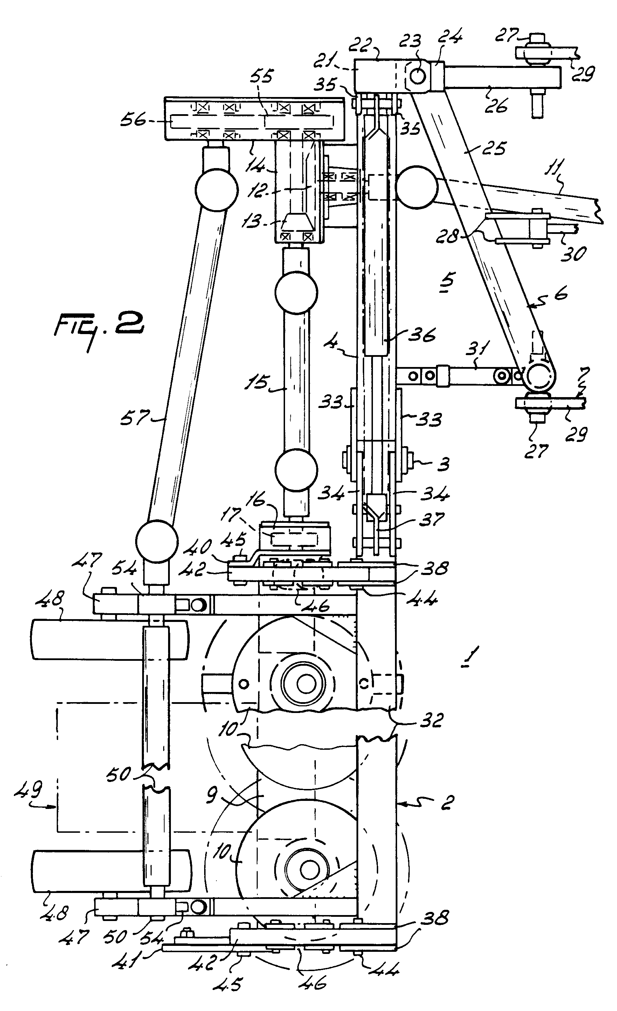

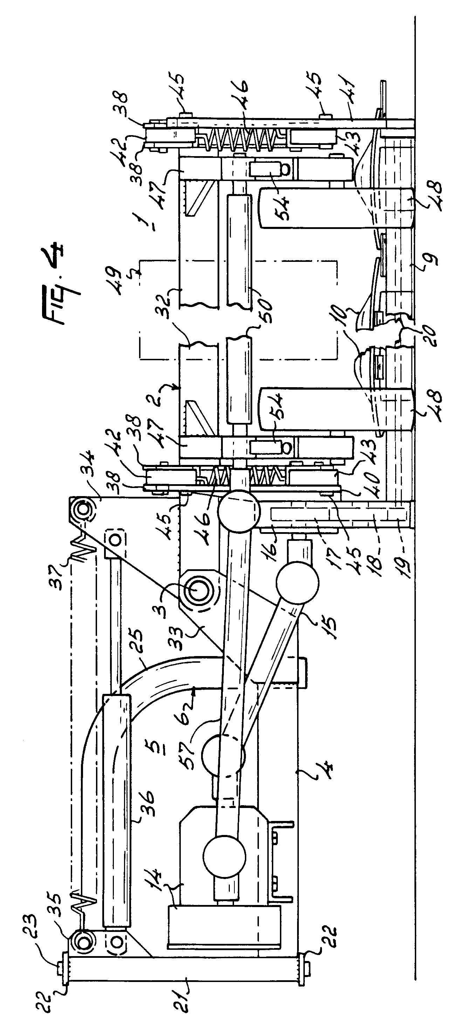

The cutter bar 1 comprises a supporting beam 9 assembled from separate or non-separate mowing member carrier elements, optionally with intermediate elements, and mowing members 10 which are drivable about upwardly extending rotary shafts and are disposed on the supporting beam. The mowing members 10 are driven from the tractor 8 via the power take-off shaft 11, the bevel gear wheels 12 and 13 contained in the gear box 14 (see Figure 2), the universal coupling 15, the gear wheels 17, 18 and 19 contained in the gear box 16 (see Figure 4) and the drive shaft 20 extending through the cutter bar. The gear box 16 is connected rigidly to one end of the cutter bar 1.

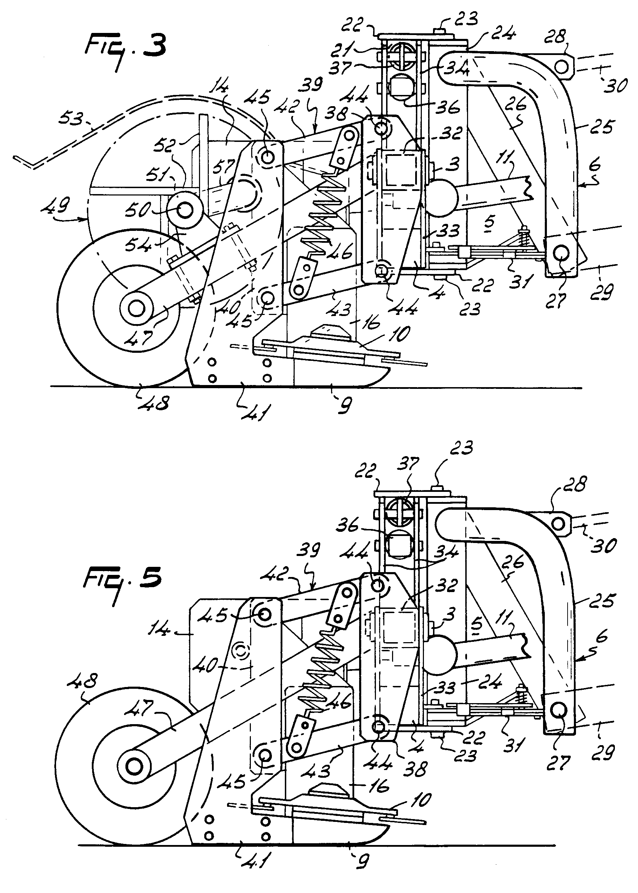

At its one end, the carrier arm 4 is connected pivotably to the frame 2 and at its other end to an upwardly extending pivotal arm 21 (see Figure 4). At its upper and lower ends, the pivotal arm 21 is provided with lugs 22, by means of which the pivotal arm 21 is coupled capably of pivotal movement about a pivot shaft 23 (see Figure 3) to the coupling trestle 6. The pivot shaft 23 extends upwardly and, in the embodiments shown, vertically when the mowing machine is in the horizontal position.

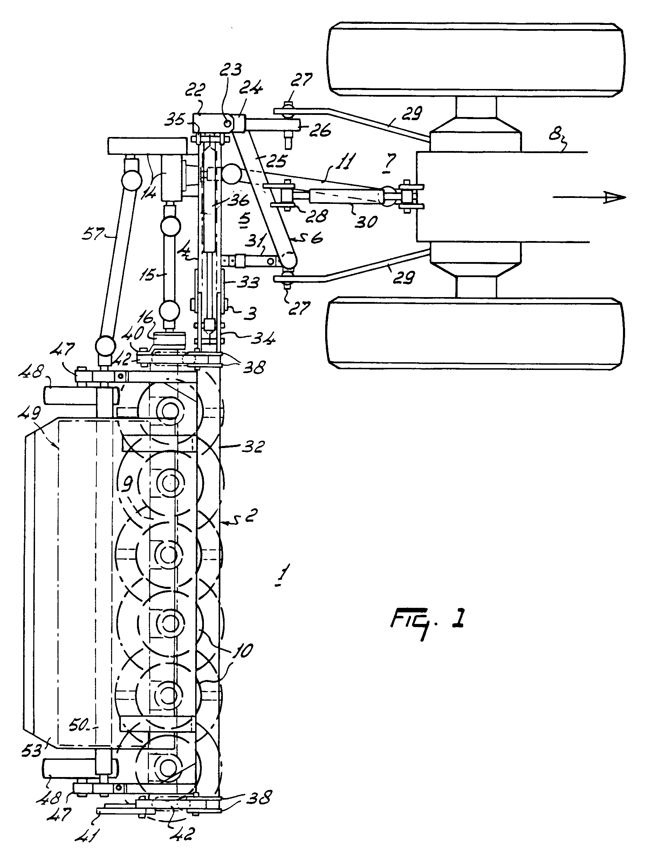

The pivot shaft 23 is constituted by two pins projecting from the lower and upper ends of a supporting beam 24 or, for example, by the ends of a pin supported in the supporting beam 24. The supporting beam 24 extends parallel to the pivotal arm 21 and constitutes part of the coupling trestle 6. In addition, the coupling trestle 6 includes a coupling beam 25 which extends obliquely forwardly from the upper side of the supporting beam 24, as is shown in Figures 1 and 2, and includes a downwardly extending portion. An obliquely downwardly extending coupling beam 26 is connected to the upper side of the supporting beam 24. Coupling pins 27, which are in alignment, are fitted to the leading side of the coupling beam 26 and to the lower end of the downwardly extending portion of the coupling beam 25. The coupling beam 25 is furthermore provided with coupling lugs 28. The coupling pins 27 can be coupled to the lifting arms 29 of the three-point lifting hitch 7 of the tractor 8, while the lugs 28 can be coupled to the top rod 30 of the three-point lifting hitch 7.

A deflection mechanism 31 is arranged between the coupling trestle 6 and the carrier arm 4, remote from the pivot shaft 23. In a manner known per se, the deflection mechanism comprises two coupling arms which are located above each other and are slidable by spring action, one arm being connected pivotably to the carrier arm 4 and the other arm to the lower end of the downwardly extending portion of the coupling beam 25.

The frame 2 includes a frame beam 32 which, taken in the direction of operative travel of the mowing machine, extends at least substantially above the leading side of the mowing members 10. Near its one end, the frame beam 32 is coupled via the shaft 3 to a fork 33 constituting part of the carrier arm 4 (see figure 4). Near said end, the frame beam 32 is furthermore fitted with supporting plates 34. Between the supporting plates 34 and lugs 35, which are rigidly connected to the pivotal arm 21, there are provided means constituted by a hydraulic cylinder 36 for allowing upward movement of the frame 2 relative to the carrier frame 5 about the shaft 3, as well as a weight relief member formed in the embodiments described by only one weight relief spring 37. Both the hydraulic cylinder 36 and the weight relief spring 37 have their two ends connected pivotably to the supporting plates 34 and to the lugs 35, respectively. In a construction wherein the carrier arm 4 is connected to the lower end of the pivotal arm 21 capably of pivotal movement about a shaft which extends substantially in the direction of operative travel, the weight relief spring may alternatively be provided between the lugs 35 and that point of the carrier arm 4 that is located near the frame 2.

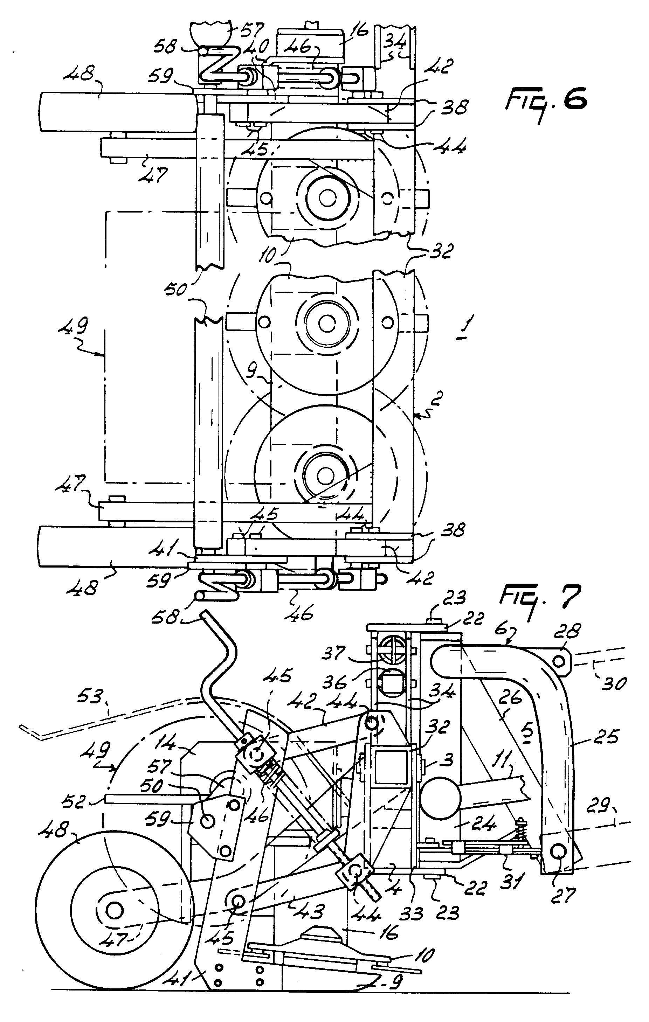

Near its two ends, the frame beam 32 is provided with two carrier plates 38 rigidly connected thereto. Via a hinging quadrangle structure 39, the cutter bar 1 is coupled to these plates by means of two mounting brackets 40 and 41. The mounting bracket 40 is connected rigidly via the wall of the gear box 16 to one end of the cutter bar 1, while the mounting bracket 41 is connected directly and rigidly to the other end thereof. The mounting bracket 41 has a rearwardly extending portion and a portion which extends upwardly from the rearwardly extending portion. The two mounting brackets 40, 41 extend upwardly to a height which is approximately equal to the height at which the frame beam 32 is located, at least when the mowing machine is operative. The hinging quadrangle structure 39 is designed as a parallelogram structure and comprises upper and lower pivotal arms 42 and 43, respectively, which are coupled via aligned, first pivot shafts 44 to the frame 2, more specifically to the carrier plates 38 and, via aligned, second pivot shafts 45 to the mounting brackets 40, 41 and hence to the cutter bar 1. From their points of connection to the frame, the pivotal arms 42, 43 extend obliquely downwardly and rearwardly. The hinging quadrangle structure 39 includes damped spring members 46, with the aid of which the cutter bar 1 is connected to the frame in such a manner that it is flexible relative thereto. These spring members 46 operate at least along a diagonal in the hinging quadrangle structure. In the first embodiment shown in Figures 1 - 4 and the second embodiment shown in Figure 5, the spring is of a constant length; however, it is alternatively possible, as is shown in Figure 7 for the third embodiment, to provide the spring also in this instance with an adjusting mechanism so as to have the cutter bar 1 be carried at least partly by the frame at a higher or a lower spring force.

Rigidly connected to the frame beam 32, there are furthermore two carriers 47 for the connection of ground wheels 48. Relative to the cutter bar, these ground wheels are mounted near the ends thereof, but within the mowing range of the cutter bar.

In the first embodiment shown in Figures 1 - 4, the mowing machine is additionally provided with a crusher device 49. This crusher device comprises a substantially horizontal rotary shaft 50, which is fitted with a crusher rotor 51 having crusher tines 52, and a hood 53. The crop to be crushed is conveyed rearwardly between the crusher rotor 51 and the hood 53 over the crusher rotor. The rotary shaft 50 and the hood 53 are positioned in or connected to, respectively, a crusher mounting frame which is connected rigidly to the frame 2 and is constituted by the carriers 47 and the supports 54 rigidly connected thereto. The crusher device is driven from the tractor via the power take-off shaft 11, the gear wheels 12 and 13, and via the gear wheels 55 and 56 in the gear box 14 and the universal coupling 57.

In this embodiment, the weight of the mowing machine is carried for the greater part by the weight relief spring 37 and the ground wheels 48, while the cutter bar bears on the soil by only part of its weight. This also holds for the second embodiment which, apart from the fact that the crusher device is lacking, is fully identical to the first embodiment.

A third embodiment is shown in Figures 6 and 7. This embodiment differs from the embodiment shown in Figures 1 - 4 in the following respects:
- The spring members 46 cum damping means in the hinging quadrangle structure extend along the other diagonal and are adjustable in length by means of an adjusting means 58;
- The rotary shaft 50 and the hood 53 of the crusher device 49 are disposed in or connected to, respectively, a crusher carrier frame which is connected rigidly to the cutter bar 1 and, at one side, is constituted by the mounting bracket 41 and a support 59 connected rigidly thereto and, at the other side, is constituted by the mounting bracket 40 which, in this embodiment, extends farther to the rear than in the embodiments described hereinbefore.

Furthermore, it should be noted that, in this embodiment, the carriers 47 are of a curved shape.

In this embodiment, the weight of the mowing machine is carried for a significant part by the weight relief spring 37 and the ground wheels 48, while the cutter bar and the crusher device bear on the soil by only part of their weight.

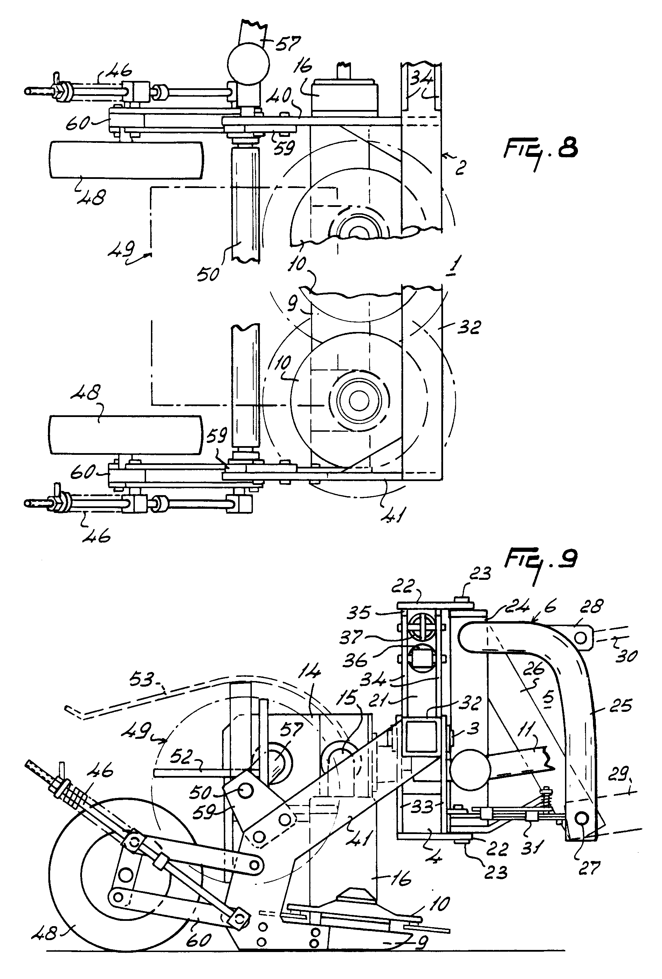

A fourth embodiment is shown in Figures 8 and 9. This embodiment differs in the following respects from the embodiments described hereinbefore:
- The mounting brackets 40 and 41 are connected to the frame 2 not via a hinging quadrangle structure but rigidly thereto, more in particular to the frame beam 32;
- The crusher device is connected rigidly to the frame, more specifically by means of the mounting brackets 40, 41 and the support 59;
- The ground wheels 48 are connected flexibly to the mounting brackets 40, 41 via a hinging quadrangle structure 60; the hinging quadrangle structure 60 is substantially of the same design as the hinging quadrangle structure 39. The spring members 46 cum damping means are provided in the same manner as in the third embodiment and are also adjustable in length.

In this embodiment, the weight of the mowing machine is carried for the greater part by the weight relief spring and the cutter bar; only part of its weight with respect to the soil is taken up by the ground wheels.

In all the embodiments it is possible, by a proper dimensioning and/or setting of the weight relief spring and of the spring members associated with the hinging quadrangle structure, to adjust the pressure of the cutter bar on the soil such that the mowing machine can follow unevennesses of the soil without any negative effect on its stability, even when it is moved over the field at a relatively high speed.

## Claims

1. A mowing machine comprising a carrier frame (5) provided with coupling points for connecting the mowing machine to the lifting hitch (17) of a tractor (8), a frame (2) which is connected pivotably to the carrier frame (5) about a substantially horizontal shaft (3) in the direction of operative travel, mowing members (10) which are connected to the frame (2) and are drivable about upwardly extending rotary shafts, and at least one weight relief member (37), active during operation of the machine between the carrier frame (5) and the frame (2) with the mowing members, characterized in that the frame (2) is supported by at least two ground wheels (48), while means (39, 46; 60, 46) including a spring-loaded member (46) are provided allowing of a movement of the mowing members (10) in upward and downward direction relative to the frame (2) and/or the ground wheels (48).

2. A mowing machine as claimed in claim 1, characterized in that the ground wheels (48) are mounted in a fixed position relative to the frame (2) and the mowing members (10) are connected to the frame (2) movably in upward and downward direction relative thereto.

3. A mowing machine as claimed in claim 1 or 2, characterized in that it includes a crusher device (49) and that the mowing members (10) are mounted in the frame (2) capably of movement in upward and downward direction relative to the crusher device (49).

4. A mowing machine as claimed in claim 1 or 2, characterized in that it includes a crusher device (49) which is mounted in the frame (2) movably in upward and downward direction relative thereto.

5. A mowing machine as claimed in claim 1, characterized in that the mowing members (10) are provided in a fixed position relative to the frame (2), and that the ground wheels (48) are connected to the frame (2) movably in upward and downward direction relative to the mowing members (10).

6. A mowing machine as claimed in any one of the preceding claims, characterized in that the means (39, 46; 60, 46) which allow of a relative movement between the ground wheels (48) on the one hand and the mowing members (10) on the other include a spring-loaded member (46).

7. A mowing machine as claimed in any one of the preceding claims, characterized in that the means (39, 46; 60, 46) allowing of a relative movement between the ground wheels (48) on the one hand and the mowing members (10) on the other include a member damping the said relative movement.

8. A mowing machine as claimed in any one of the preceding claims, characterized in that the relative movement between the ground wheels (48) on the one hand and the mowing members (10) on the other is obtained by a hinging quadrangle structure (39; 60).

9. A mowing machine as claimed in claim 8, characterized in that the mowing members (10) are connected to the frame (2) capably of movement in upward and downward direction relative thereto by means of a hinging quadrangle structure (39).

10. A mowing machine as claimed in claim 9, characterized in that the hinging quadrangle structure (39) comprises spring-loaded members (46), by means of which the mowing members (10) are connected to the frame (2) capably of spring-induced movement relative thereto.

11. A mowing machine as claimed in claim 10, characterized in that the spring members (46) act at least along a diagonal in the hinging quadrangle structure (39).

12. A mowing machine as claimed in claim 10 or 11, characterized in that a spring member (46) is provided with an adjusting mechanism (58) to have the mowing members (10) be supported with greater or lesser spring force at least partly by the frame (2).

13. A mowing machine as claimed in any one of claims 9 to 12, characterized in that the mowing members (10) are provided pivotably on mowing member carrier elements, which carrier elements together with any optional intermediate elements provided therebetween and the mowing members (10) constitute a cutter bar (1) which is connected in its totality to the frame (2) via the hinging quadrangle structure (39).

14. A mowing machine as claimed in claim 13, characterized in that a ground wheel (48) is located behind the cutter bar (1) near each of its two ends and within the mowing range.

15. A mowing machine as claimed in claim 14, characterized in that the ground wheels (48) are arranged in the frame (2) by means of spring-loaded structures which operate independently of each other.

16. A mowing machine as claimed in claim 15, characterized in that the spring structures each include an adjustable spring member.

## Patentansprüche

1. Mähmaschine mit einem Tragrahmen (5), der mit Anschlüssen zum Anbau an die Hebevorrichtung (17) eines Schleppers (8) versehen ist, mit einem Gestell (2), das mit dem Tragrahmen (5) um eine im wesentlichen horizontale, in Arbeitsrichtung liegende Achse (3) schwenkbar verbunden ist, mit Mähgliedern (10), die an dem Gestell (2) angeordnet und um aufwärts gerichtete Drehachsen antreibbar sind, und mit mindestens einem Gewichtsentlastungselement (37), das im Betrieb der Maschine zwischen dem Tragrahmen (5) und dem Gestell (2) mit den Mähgliedern wirksam ist,
dadurch gekennzeichnet, daß das Gestell (2) von mindestens zwei Laufrädern (48) abgestützt ist, und daß eine Vorrichtung (39, 46; 60, 46) vorgesehen ist, die ein federbelastetes Bauteil (46) enthält und Höhenbewegungen der Mähglieder (10) relativ zu dem Gestell (2) und/oder den Laufrädern (48) erlaubt.

2. Mähmaschine nach Anspruch 1,
dadurch gekennzeichnet, daß die Laufräder (48) in bezug auf das Gestell (2) in fester Lage angeordnet sind, und daß die Mähglieder (10) mit dem Gestell (2) höhenbeweglich verbunden sind.

3. Mähmaschine nach Anspruch 1 oder 2,
dadurch gekennzeichnet, daß die Maschine mit einer Quetschvorrichtung (49) versehen ist, und daß die Mähglieder (10) an dem Gestell (2) relativ zu der Quetschvorrichtung (49) höhenbeweglich angeordnet sind.

4. Mähmaschine nach Anspruch 1 oder 2,
dadurch gekennzeichnet, daß die Maschine mit einer Quetschvorrichtung (49) versehen ist, die an dem Gestell (2) höhenbeweglich angeordnet ist.

5. Mähmaschine nach Anspruch 1,
dadurch gekennzeichnet, daß die Mähglieder (10) in bezug auf das Gestell (2) in fester Lage angeordnet sind, und daß die Laufräder (48) mit dem Gestell (2) höhenbeweglich relativ zu den Mähgliedern (10) verbunden sind.

6. Mähmaschine nach einem der vorhergehenden Ansprüche,
dadurch gekennzeichnet, daß die Vorrichtung (39, 46; 60, 46), die eine Relativbewegung zwischen den Laufrädern (48) einerseits und den Mähgliedern (10) andererseits erlaubt, ein federbelastetes Bauteil (46) enthält.

7. Mähmaschine nach einem der vorhergehenden Ansprüche,
dadurch gekennzeichnet, daß die Vorrichtung (39, 46; 60, 46), die eine Relativbewegung zwischen den Laufrädern (48) einerseits und den Mähgliedern (10) andererseits erlaubt, ein diese Relativbewegung dämpfendes Bauteil enthält.

8. Mähmaschine nach einem der vorhergehenden Ansprüche,
dadurch gekennzeichnet, daß zur Erzielung der Relativbewegung zwischen den Laufrädern (48) einerseits und den Mähgliedern (10) andererseits eine Viergelenk-Konstruktion (39; 60) vorgesehen ist.

9. Mähmaschine nach Anspruch 8,
dadurch gekennzeichnet, daß die Mähglieder (10) mit dem Gestell (2) mittels einer Viergelenk-Konstruktion (39) höhenbeweglich verbunden sind.

10. Mähmaschine nach Anspruch 9,
dadurch gekennzeichnet, daß die Viergelenk-Konstruktion (39) federbelastete Bauteile (46) aufweist, durch die die Mähglieder (10) mit dem Gestell (2) federnd beweglich verbunden sind.

11. Mähmaschine nach Anspruch 10,
dadurch gekennzeichnet, daß die Federelemente (46) mindestens in einer Diagonale der Viergelenk-Konstruktion (39) wirksam sind.

12. Mähmaschine nach Anspruch 10 oder 11,
dadurch gekennzeichnet, daß ein Federelement (46) mit einer Stellvorrichtung (58) versehen ist, um die Mähglieder (10) mindestens teilweise von dem Gestell (2) unter größerer oder kleinerer Federkraft abzustützen.

13. Mähmaschine nach einem der Ansprüche 9 bis 12,
dadurch gekennzeichnet, daß die Mähglieder (10) schwenkbar an Mähglied-Trägern angeordnet sind, die gegebenenfalls zusammen mit wahlweise zwischen ihnen und den Mähgliedern (10) vorgesehenen Zwischenelementen einen Mähbalken (1) bilden, der als Einheit mit dem Gestell (2) mittels der Viergelenk-Konstruktion (39) verbunden ist.

14. Mähmaschine nach Anspruch 13,
dadurch gekennzeichnet, daß jeweils ein Laufrad (48) hinter dem Mähbalken (1) nahe dessen beiden Enden und innerhalb der Mähbreite angeordnet ist.

15. Mähmaschine nach Anspruch 14,
dadurch gekennzeichnet, daß die Laufräder (48) an dem Gestell (2) mittels federbelasteter Konstruktionen angeordnet sind, die unabhängig voneinander wirksam sind.

16. Mähmaschine nach Anspruch 15,
dadurch gekennzeichnet, daß die Federkonstruktionen jeweils ein einstellbares Federelement aufweisen.

## Revendications

1. Machine faucheuse comprenant un châssis porteur (5) muni de points d'attache pour relier la machine faucheuse au dispositif d'attelage-levage (17) d'un tracteur (8), un châssis (2) qui est relié de manière pivotante au châssis porteur (5) autour d'un arbre (3) sensiblement horizontal dans le sens de marche du travail, des organes faucheurs (10) qui sont reliés au châssis (2) et qui peuvent être entraînés autour d'axes de rotation s'étendant vers le haut, et au moins un organe (37) de soulagement de poids, actif pendant le fonctionnement de la machine entre le châssis porteur (5) et le châssis (2) avec les organes faucheurs, caractérisée en ce que le châssis (2) est soutenu par au moins deux roues (48) roulant au sol, tandis que des moyens (39, 46; 60, 46) comprenant un organe (46) taré par un ressort sont prévus, permettant un movement des organes faucheurs (10) vers le haut et vers le bas par rapport au châssis (2) et/ou par rapport aux roues (48) roulant au sol.

2. Machine faucheuse selon la revendication 1, caractérisée en ce que les roues (48) roulant au sol sont montées en position fixe par rapport au châssis (2) et les organes faucheurs (10) sont reliés au châssis (2) de manière mobile vers le haut et vers le bas par rapport à lui.

3. Machine faucheuse selon la revendication 1 ou 2, caractérisée en ce qu'elle comporte un dispositif de conditionnement (49) et en ce que les organes faucheurs (10) sont montés dans le châssis (2) en étant capables de se mouvoir vers le haut et vers le bas par rapport au dispositif de conditionnement (49).

4. Machine faucheuse selon la revendication 1 ou 2, caractérisée en ce qu'elle comporte un dispositif de conditionnement (49) qui est monté dans le châssis (2) en étant mobile vers le haut et vers le bas par rapport à lui.

5. Machine faucheuse selon la revendication 1, caractérisée en ce que les organes faucheurs (10) sont prévus en position fixe par rapport au châssis (2) et en ce que les roues (48) roulant au sol sont reliées au châssis(2) en étant mobiles vers le haut et vers le bas par rapport aux organes faucheurs (10).

6. Machine faucheuse selon l'une quelconque des revendications précédentes, caractérisée en ce que les moyens (39, 46; 60, 46) permettant un mouvement relatif entre les roues (48) roulant au sol, d'une part, et les organes faucheurs (10) d'autre part comprennent un organe (46) taré par un ressort.

7. Machine faucheuse selon l'une quelconque des revendications précédentes, caractérisée en ce que les moyens (39, 46; 60, 46) permettant un mouvement relatif entre les roues (48) roulant au sol, d'une part, et les organes faucheurs (10), d'autre part, comprennent un organe amortissant ledit mouvement relatif.

8. Machine faucheuse selon l'une quelconque des revendications précédentes, caractérisée en ce que le mouvement relatif entre les roues (48) roulant au sol, d'une part, et les organes faucheurs (10), d'autre part, est obtenu au moyen d'une structure quadrangulaire articulée (39; 60).

9. Machine faucheuse selon la revendication 8, caractérisée en ce que les organes faucheurs (10) sont reliés au châssis (2) en étant capables de se mouvoir vers le haut et vers le bas par rapport à lui, au moyen d'une structure quadrangulaire articulée (39).

10. Machine faucheuse selon la revendication 9, caractérisée en ce que la structure quadrangulaire articulée (39) comprend des organes (46) tarés par des ressorts, au moyen desquels les organes faucheurs (10) sont reliés au châssis (2) en étant capables de se mouvoir par rapport à lui sous l'influence d'un ressort.

11. Machine faucheuse selon la revendication 10, caractérisée en ce que les organes à ressort (46) agissent au moins selon une diagonale dans la structure quadrangulaire articulée (39).

12. Machine faucheuse selon la revendication 10 ou 11, caractérisée en ce qu'un organe à ressort (46) est muni d'un mécanisme de réglage (58) pour obtenir que les organes faucheurs (10) soient soutenus avec une force plus ou moins grande du ressort, au moins partiellement par le châssis (2).

13. Machine faucheuse selon l'une quelconque des revendications 9 à 12, caractérisée en ce que les organes faucheurs (10) sont prévus pivotants sur des éléments porteurs d'organes faucheurs, lesquels éléments porteurs constituent, ensemble avec des éléments intermédiaires facultatifs quelconques prévus entre eux et les organes faucheurs (10), une barre de coup (1) qui est reliée dans sa totalité au châssis (2) par l'intermédiaire de la structure quadrangulaire articulée (39).

14. Machine faucheuse selon la revendication 13, caractérisée en ce qu'une roue (48) roulant au sol est située derrière la barre de coup (1) près de chacune de ses extrémités et dans le cadre de la largeur de la zone de fauchage.

15. Machine faucheuse selon la revendication 14, caractérisée en ce que les roues (48) roulant au sol sont disposées dans le châssis (2) au moyen de structures tarées par des ressorts qui agissent indépendamment l'une de l'autre.

16. Machine faucheuse selon la revendication 15, caractérisée en ce que les structures à ressorts comportent chacune un organe à ressort réglable.
